# EUROPÄISCHE PATENTANMELDUNG

(11) **EP 2 887 211 A1**
(43) Veröffentlichungstag der Anmeldung: **24.06.2015**
(21) Anmeldenummer: 13198193.8
(22) Anmeldetag: 18.12.2013
(51) Int. Cl.: G06F 9/445, G06N 5/00

(54) **Verfahren und System zur Bereitstellung und/oder Installation von ein oder mehreren Softwarebausteinen auf einem Zielgerät in einem verteilten Computersystem**

(71) Anmelder: SCHNEIDER ELECTRIC AUTOMATION GMBH, 97828 Marktheidenfeld (DE)
(72) Erfinder: Dr. Marcus ZINN, 63110 Rodgau (DE)
(74) Vertreter: Stoffregen, Hans-Herbert

(57) **Zusammenfassung**

Die Erfindung bezieht sich auf ein Verfahren zur Bereitstellung und/oder Installation von ein oder mehreren Softwarebausteinen auf einem Zielgerät in einem verteilten Computersystem unter Anwendung eines Sets von Informationen und/oder Regeln, die die Ausführung eines Deployments einschließen sowie auf ein System zu Durchführung des Verfahrens. Um des Deployment eines Zielgerätes für einen unerfahrenen Benutzer zu vereinfachen, ist vorgesehen, dass das Set von Informationen und/oder Regeln in dem Zielgerät gespeichert wird, dass das Zielgerät als Reaktion auf ein Trigger-Signal unter Anwendung von Informationen und/oder Regeln des Sets zumindest einen benötigten extern abgelegten Softwarebaustein sucht und dass der zumindest eine Softwarebaustein nach Auffinden unter Anwendung von Informationen und/oder Regeln des Sets auf dem Zielgerät installiert wird.

## Beschreibung

Die Erfindung bezieht sich auf ein Verfahren zur Bereitstellung und gegebenenfalls Installation von ein oder mehreren Softwarebausteinen auf einem Zielgerät in einem verteilten Computersystem nach dem Oberbegriff des Anspruchs 1 sowie auf ein System zur Durchführung des Verfahrens nach dem Oberbegriff des Anspruchs 10.

In der DE 10 2006 035 890 A1 ist ein System und ein Verfahren zur automatischen Installation und Wartung von Hard- und Software in einem verteilten Computersystem beschrieben. Nach dem Stand der Technik ist ein Systeminstallations- und/oder Systemwartungswerkzeug vorgesehen, welches von jedem Systemknoten des verteilten Systems aktivierbar ist. Das Systeminstallations- und/oder Systemwartungswerkzeug wählt ein Softwarepaket und/oder eine funktionale Komponente aus und führt die Wartungsschritte des ausgewählten Softwarepaketes und/oder der ausgewählten funktionalen Komponenten bezüglich der Verteilung, Installation und/oder Konfiguration des Softwarepaktes und/oder der ausgewählten funktionalen Komponenten auf den Systemkomponenten des verteilten Systems in einer vorgegebenen Reihenfolge automatisch aus. Dabei ist vorgesehen, dass das Systeminstallations- und/oder Systemwartungswerkzeug eine Wartungsaktivität, insbesondere ein Softwarepaket und/oder eine Funktionalität ausgewählt. Die ausgewählte Funktionalität ist beispielsweise eine Bedienstation-Funktionalität oder die Ankopplung eines Reglers in einem Prozessleitsystem.

Die auswählbaren Softwarepakete sind Bestandteile von Lebenszyklus-Managementaktivitäten, wie beispielsweise neue Systeminstallation, System-Updates, Systemaktualisierungen zu einer höheren Version, Systemerweiterungen und zusätzliche Funktionalitäten oder Systemanalysen.

Das Systeminstallations- und/oder Systemwartungswerkzeug führt die entsprechenden Wartungsschritte der ausgewählten Wartungsaktivität in einer vorgegebenen Reihenfolge automatisch auf den verschiedenen Systemknoten des verteilten Systems aus. Die Wartungsschritte umfassen insbesondere die Verteilung, Installation und Konfiguration der ausgewählten Software-Pakete.

Bei dem bekannten System handelt es sich um ein geschlossenes System, wobei standardisierte Softwarepakete nach standardisierten Wartungsschritten mittels eines Systeminstallationswerkzeugs installiert werden. Das Verfahren und das System sind zum individuellen Deployment eines einzelnen Gerätes ohne Expertenwissen nicht geeignet.

In einem Artikel von M. Zinn, u.a."Automated Reuse of Software Reuse Activities in an Industrial Environment - Case Study Results" ICSEA 2012; The 7th Internationale Conference of Software Engineering Advances, ist ein Verfahren und ein System zur Automatisierung von wissensbasierten Software-Konstruktionsaktivitäten auf Geräten mit geringen Datenverarbeitungs-Ressourcen beschrieben.

Die Wiederverwendbarkeit von Software-Bausteinen, wie Klassen, Komponenten oder Services erfordert von einem Benutzer professionelle Kenntnisse oder Expertenwissen.

Es wird vorgeschlagen, dass ein Experte notwendiges Wissen über die Software-Reuse-Aktivitäten eines spezifischen Softwarebausteins in ein System speichert (Knowledge-Extraction), wobei das System fähig ist, die Aktivität automatisch mit einem Minimum an menschlicher Interaktion basierend auf gespeichertem Wissen auszuführen. Als Beispiel für die Ausführung von Aktivitäten für Softwarebausteine sind Transformation, Integration, Tests, Validation und Deployment angegeben.

Folglich sind Benutzer ohne notwendiges Wissen in der Lage, diese Aktivitäten auszuführen (Knowledge Injection). Ein Lernprozess für diese spezifische Aktivität und spezifischen Software-Bausteine ist nicht notwendig.

Ein verteiltes System zur Durchführung des Verfahrens umfasst eine Datenbank mit Softwarebausteinen und vollständigen Informationen über Software-Konstruktionsaktivitäten und einen Server, welcher Informationen über die Softwarebausteine und Software-Konstruktionsaktivitäten aus der angeschlossenen Datenbank enthält und diese Informationen für einen Benutzer zugänglich macht. Des Weiteren ist vorgesehen, dass der Server die angefragten Aktivitäten ausführt und die erhaltenen Ergebnisse einem Benutzer anzeigt, der sodann weitere Entscheidungen trifft, Aktionen ausführt oder Daten eingibt. Das Verhalten des Systems wird über Benutzereingaben gesteuert.

Aus obigem ergibt sich, dass es für einen Entwicklungsingenieur extrem schwierig ist, alle möglichen Informationen und Regeln sowie Variationen zu kennen und zu beherrschen, die für ein Deployment eines Zielgerätes erforderlich sind. Zwar kann Wissen in einer Datenbank gespeichert werden, wobei allerdings wiederum Wissen zur Bedienung der Datenbank und zum Auffinden des Wissens notwendig ist. Auch muss das in einer Wissensdatenbank aufgefundene Wissen durch den Benutzer interpretiert werden, wodurch die Gefahr von Abwandlungen und Missverständnissen gegeben ist.

Auch existieren bereits standardisierte Deployment-Tools, wie beispielsweise in der oben zitierten DE 10 2006 035 890 A1 beschrieben. Allerdings ist zur Bedienung der standardisierten Deployment-Tools ebenfalls Expertenwissen notwendig, wobei unterschiedliche Hersteller verschiedene Deployment-Tools verwenden.

Des Weiteren sind standardisierte Plattformen im Einsatz, wobei jedoch ebenfalls Expertenwissen notwendig ist, um Deployment-Tools der verschiedenen Plattformen zu bedienen. Ein Nachteil ist, dass nicht alle Hersteller dieselben standardisierten Plattformen benutzen.

Davon ausgehend liegt der vorliegenden Erfindung die Aufgabe zu Grunde, ein Verfahren und ein System der eingangs genannten Art derart weiterzubilden, dass das Deployment eines Zielgerätes vereinfacht wird. Insbesondere soll das Zielgerät in der Lage sein, sein Deployment eigenständig ohne Eingriff eines Benutzers durchzuführen.

Zur Lösung der Aufgabe wird erfindungsgemäß vorgeschlagen, dass das Set von Informationen und/oder Regeln in dem Zielgerät gespeichert wird, dass das Zielgerät als Reaktion auf ein Trigger-Signal unter Anwendung von Informationen und/oder Regeln des Sets zumindest einen benötigten extern abgelegten Softwarebaustein sucht und dass der zumindest eine Software-Baustein nach Auffinden unter Anwendung von Informationen und/oder Regeln des Sets auf dem Zielgerät installiert wird.

Bei einer bevorzugten Verfahrensweise werden als Informationen und/oder Regeln des Sets solche verwendet, die Wissen über Identifizierung von benötigten Softwarebausteinen und deren Abhängigkeiten sowie notwendige Transformations- und/oder Deploymentanwendungen enthalten.

Gemäß einer weiteren bevorzugten Ausführungsform ist vorgesehen, dass das Wissen über Software-Konstruktionsaktivitäten als das Set von Informationen und/oder Regeln unmittelbar in dem Zielgerät, welches geringe Ressourcen aufweist, gespeichert wird, wobei ein Prozessor die Informationen und/oder Regeln abarbeitet und für die Durchführung von Aktivitäten, die aufgrund der eingeschränkten Ressourcen des Zielgerätes auf diesem nicht durchführbar sind, Services außerhalb des Gerätes nutzt. Für die Ausführung von Aktivitäten bei der Anwendung der Informationen und/oder Regeln des Sets werden externe Tools verwendet, die über Service-Aufrufe aufgerufen werden.

Vorzugsweise ruft das Zielgerät zur Transformation des zumindest einen benötigten Softwarebausteins ein externes Transformations-Tool auf, wobei die Transformation des zumindest einen Softwarebausteins mittels des Transformations-Tools in einer Umgebung außerhalb des Zielgerätes ausführt wird. Ebenfalls kann zur Installation und/oder Konfiguration des zumindest einen benötigten Softwarebausteins ein externes Deployment-Tool aufgerufen werden, wobei das Deployment-Tool in einer Umgebung außerhalb des Zielgerätes ausgeführt wird. Ein Ergebnis des externen Transformations- und/oder Deployment-Tools wird aus der externen Umgebung in das Zielgerät übertragen und in einem flüchtigen Speicher des Zielgerätes zwischengespeichert.

Gegenüber dem Stand der Technik wird der Vorteil erreicht, dass Services in Form von Transformations-Tools oder Deployment-Tools nicht mehr auf dem Zielgerät selbst ablaufen müssen, sondern über Webservice-Aufrufe auf Resourcen außerhalb des Zielgerätes ablaufen können. Gegenüber dem Stand der Technik werden folgende Vorteile erreicht:
- Wissen muss nicht mehr von einer Person erlernt werden, wenn diese den Auftrag erhält, ein Deployment durchzuführen,
- Updates von Wissen erfolgt durch den Upload von Textinformationen, z.B. XML Daten auf das Gerät, d. h., kein Update von binären Daten in Form eines deployten End- oder Zwischenproduktes und
- Wissensvarianten als Resultat des Lernens sind nicht mehr vorhanden, d. h. das Wissen wird durch jedes Gerät gleichbehandelt.

Dies schließt unterschiedliches Deployment auf der Basis unterschiedlichen Wissens weitesgehend aus und senkt damit das Risiko von Fehlern ganz erheblich.

Zur Lösung der Aufgabe werden vorzugsweise folgende Verfahrensschritte vorgeschlagen:
- Laden des notwendigen Wissens in Form eines Sets von Informationen und/oder Regeln in einen permanenten Speicher des Zielgeräts, welches geringe Ressourcen und/oder Kommunikationsmöglichkeiten aufweisen kann;
- Starten einer Software-Konstruktionsaktivität auf dem Zielgrät durch ein Trigger-Signal;
- Laden des Sets von Informationen und/oder Regeln aus dem permanenten Speicher;
- Ausführen der Regeln in einer bestimmten Reihenfolge in dem Zielgerät;
- Laden notwendiger Daten zur Ausführung bestimmter Regeln aus einer Datenbank und Speichern der Daten in einem flüchtigen Speicher;
- Aufrufen von Hilfsprogrammen wie Transformations-Tools und/oder Deployment-Tools als Service über eine Webservice-Schnittstelle;
- Zwischenspeichern von Zwischenergebnissen wie transformierte Daten oder Softwarebausteine der Hilfsprogramme in dem temporären Speicher;
- Rücksenden der Ergebnisse des Deployment- oder Transformations-Vorgangs an einen Benutzer (Nicht-Experten).

Gemäß einer bevorzugten Ausführungsform kann das Deployment-Tool und/oder das Transformations-Tool über einen Webservice-Aufruf auf einer externen Resource des verteilten Computersystems gestartet werden.

Ein weiteres bevorzugtes Verfahren zeichnet sich dadurch aus, dass die notwendigen Informationen und/oder Regeln durch einen Experten in das Zielgerät hochgeladen werden. Alternativ besteht die Möglichkeit, dass das Laden der notwendigen Informationen und Wissensregeln durch ein automatisches Update des Gerätes erfolgt. Hierzu muss angegeben werden, wo Update-Informationen zu finden sind und wie diese heruntergeladen werden können.

Da die aus einer oder mehreren Datenbanken geladenen Daten und/oder Software-Bausteine zur Ausführung bestimmter Regeln eine Form aufweisen können, die bezogen auf das Gerät eine falsche Technologie oder falsche Schnittstelle haben, kann es notwendig sein, Transformations-Tools über die Webservice-Schnittstelle, die für alle Transformations-Tools als einheitliche Schnittstelle funktioniert, aufzurufen. Gleiches gilt für Deployment-Tools, die meist sehr spezialisiert sind und von Geräte- bzw. Plattformherstellern herausgegeben werden.

In Abhängigkeit von Ressourcen und Möglichkeiten des Zielgerätes können die Transformations-Tools und/oder Deployment-Tools innerhalb des Zielgerätes abgearbeitet werden. Bei Anwendungen, die die technischen Möglichkeiten und Ressourcen des Zielgerätes übersteigen, sind die Service-Typen "Aufruf von Transformations-Anwendungen" sowie "Aufruf von Deployment-Anwendungen" zu nutzen, wodurch der Rechenaufwand auf externe Geräte ausgelagert wird.

Nach Abschluss aller einzelnen Schritte, die als Regeln gespeichert wurden, werden alle Ressourcen wieder freigegeben, d. h., der Inhalt des temporären Speichers des Zielgerätes wird gelöscht.

Des Weiteren bezieht sich die Erfindung auf ein System zur Bereitstellung und gegebenenfalls Installation von ein oder mehreren Softwarebausteinen auf einem Zielgerät eines verteilten Computersystems unter Anwendung eines Sets von Informationen und/oder Regeln, die die Ausführung eines Deployments einschließen. Zur Vereinfachung des Deployments des Zielgerätes ist vorgesehen, dass der Aktivitäts-Controller sowie das Set von Informationen und/oder Regeln in dem Zielgerät implementiert ist, dass der Aktivitäts-Controller durch ein Trigger-Signal aktivierbar ist und als Reaktion auf das Trigger-Signal unter Anwendung von Informationen und/oder Regeln des Sets zumindest einen benötigten, in einem externen Speicher abgelegten Softwarebaustein sucht und dass der zumindest eine Softwarebaustein nach Auffinden unter Anwendung von Informationen und/oder Regeln des Sets auf dem Zielgerät installiert wird.

Gemäß bevorzugter Ausführung ist vorgesehen, dass der Aktivitäts-Controller zumindest eine Web-Service-Schnittstelle zum Aufruf externer Services wie externe Speicher-Services, externe Transformations-Services und/oder externe Deployment-Services aufweist.

Des Weiteren ist vorgesehen, dass der Aktivitäts-Controller einen permanenten Speicher zur Speicherung des Sets von Informationen und/oder Regeln und einen flüchtigen Speicher zur Zwischenspeicherung von Ergebnissen externer Services wie Transformations-Services und/oder Deployment-Services aufweist. Der Aktivitäts-Controller kann vorzugsweise in einem Mikro-Controller des Zielgerätes implementiert sein.

Auch kann das Zielgerät zumindest einen Sensor zur Erfassung von Zustandsänderungen aufweisen, wobei in Abhängigkeit einer Zustandsänderung des zumindest einen Sensors das Trigger-Signal erzeugt wird. Alternativ kann das Trigger-Signal durch einen Benutzer, einen Web-Service-Aufruf und/oder durch das Erfassen einer Zustandsänderung des Zielgerätes generiert werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung der den Figuren zu entnehmenden bevorzugten Ausführungsbeispiele.

Es zeigen:
- Fig. 1: eine Ausführungsform eines erfindungsgemäßen Systems zur Installation von Software-Bausteinen in einem Zielgerät eines verteilten Automatisierungssystems,
- Fig. 2: eine schematische Darstellung eines Verfahrensablaufs zur automatischen Installation von Software-Bausteinen in dem Zielgerät und
- Fig. 3: das Zielgerät in einem Service-orientierten Automatisierungssystem.

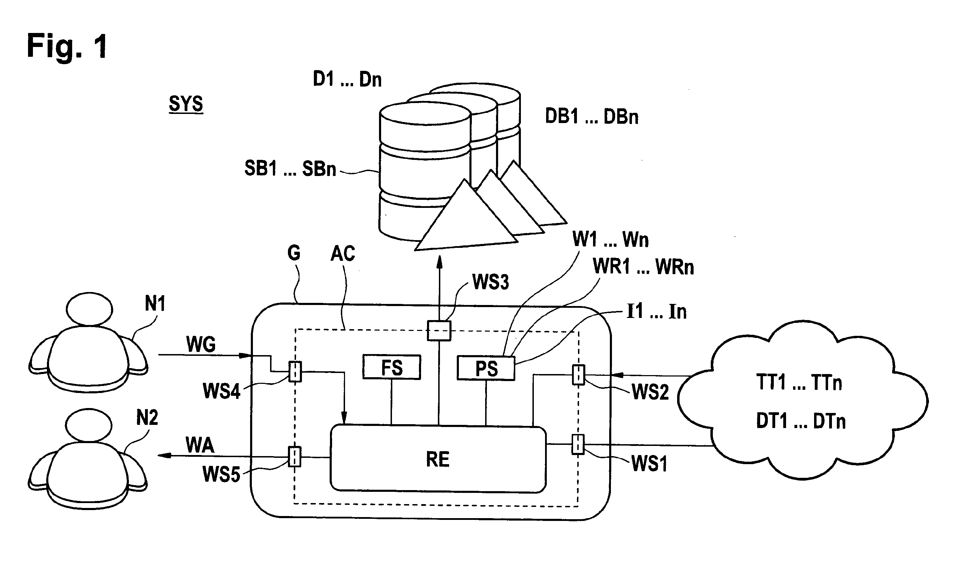

Fig. 1 zeigt in schematischer Darstellung ein System SYS zur Durchführung eines Verfahrens zur Speicherung und Ausführung von Wissen W1 ... Wn als Set von Information I1 ... In und Wissensregeln WR1 ... WRn über z. B. Identifizierung und Auffinden von benötigten Softwarebausteinen, benötigten Daten, benötigten Transformations- und/oder Deployment-Tools und/oder Deployment-Software-Konstruktionsaktivitäten auf einem Zielgerät G, welches geringe Ressourcen aufweist, unter Verwendung einer Service-Infrastruktur zur Automatisierung der wissensintensiven Installation von Software-Bausteinen SB1 ... SBn in dem Zielgerät G. Bei dem Zielgerät G handelt es sich um ein Gerät mit geringen Ressourcen und/oder Kommunikationsmöglichkeiten, wie beispielsweise ein aktiver Sensor, Steuergerät oder Feldbusgerät.

In dem Zielgerät G ist ein Aktivitäts-Controller AC implementiert, umfassend eine Recheneinheit RE, einen permanenten Speicher PS sowie einen flüchtigen Speicher FS. Des Weiteren umfasst der Aktivitäts-Controller AC Schnittstellen WS1, WS2 in Form von Webservice-Schnittstellen zur Kommunikation mit externen Services TT1 ... TTn; DT1 ... DTn, eine Schnittstelle WS3 zu externen Datenbanken DB1...DBn sowie Schnittstellen WS4, WS5 zum Anbieten von Services WG, WA durch externe Nutzer N1, N2. Die Schnittstellen WS1 ... WS5 können Bestandteil des Aktivitäts-Controllers AC oder Bestandteil einer Kommunikations-Infrastruktur des Zielgerätes G sein.

Der Nutzer N1 kann ein Experte oder ein System sein, welcher bzw. welches notwendiges Wissen als Set von Informationen I1 ... In und Wissensregeln WR1 ... WRn erzeugt und dem Zielgerät G zur Verfügung stellt, wobei das Wissen W1 ... Wn in Form der Information I1 ... In und der Wissensregeln WR1 ... WRn in dem permanenten Speicher PS des Aktivitäts-Controllers AC oder des Zielgerätes G gespeichert wird.

Bei dem Nutzer N2 handelt es sich um einen Nicht-Experten oder ein System, durch den bzw. durch das das Deployment-Verfahren auf dem Gerät G aktiviert wird.

In den Datenbanken DB1...DBn sind eine Vielzahl von Softwarebausteinen SB1 ... SBn gespeichert. Der Aktivitäts-Controller AC hat Zugriff auf die Datenbanken DB1...DBn über die Schnittstelle WS3 und kann die für das Deployment-Verfahren notwendigen Softwarebausteine z.B. SB1 ... SB3 in den flüchtigen Speicher FS oder ein externes Gerät laden.

Die Softwarebausteine SB1 ... SB3, die für das Deployment-Verfahren notwendig sind, können eine Struktur aufweisen, die von dem Zielgerät bzw. der Recheneinheit RE des Aktivitäts-Controllers AC nicht ausführbar ist. Zur Änderung dieser Struktur der Software-Bausteine SB1 ... SB3 können verschiedene Anwendungen genutzt werden, die von Anbietern des Zielgerätes oder der Geräteplattform angeboten werden. Gemäß der Erfindung umfasst der Aktivitäts-Controller AC zumindest eine Schnittstelle WS1, WS2 in Form einer Webservice-Schnittstelle für den Aufruf externer Transformations-Tools TT1 ... TTn und/oder Deployment-Tools DT1 ... DTn, die auf externen Geräten ausgeführt werden, wodurch das Zielgerät G selbst entlastet wird.

Der Erfindung liegt der Gedanke zu Grunde, dass die in dem Zielgerät G implementierte Recheneinheit RE die Wissensregeln WR1 ... WRn und/oder Informationen I1...In in einer bestimmten, vorgegebenen Reihenfolge abarbeitet und für die Durchführung von Aufgaben, die aufgrund der eingeschränkten Ressourcen des Zielgerätes G normalerweise nicht durchführbar sind, externe Services in Form von Transformations-Tools TT1 ... TTn und/oder Deployment-Tools DT1 ... DTn über Webservice-Schnittstellen WS1 ... WS2 außerhalb des Zielgerätes G ausführen lässt.

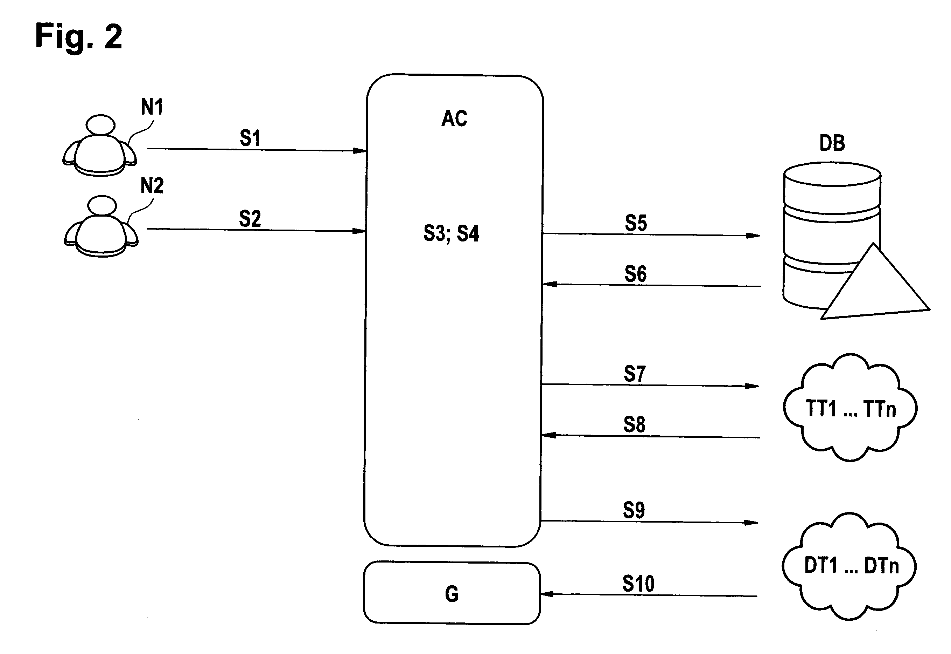

Fig. 2 zeigt rein schematisch ein Ablaufmodell des Verfahrens. In einem ersten Schritt S1 lädt der Nutzer N1 in Form eines Experten das notwendige Wissen W1 ... Wn in Form eines Sets von Informationen I1 ... In und/oder Wissensregeln WR1 ... WRn in das Zielgerät G bzw. den permanenten Speicher PS des Aktivitäts-Controllers AC. Alternativ kann in dem Zielgerät G oder dem Aktivitäts-Controller AC ein automatisches Update von Wissen W1 ... Wn durchgeführt werden. Dazu sind in dem Aktivitäts-Controller AC bzw. dem Zielgerät G Informationen enthalten, wo Informationen zum Update zu finden sind und wie dieses Update heruntergeladen werden kann.

In einem zweiten Schritt S2 startet der Nutzer N2 in Form eines Nicht-Experten durch ein Signal die Deployment-Software-Konstruktionsaktivitäten. Der Start kann über einen Webservice-Aufruf eingeleitet werden.

Die Recheneinheit RE lädt in einem Schritt S3 das Set von Informationen I1 ... In und Wissensregeln WS1 ... WSn aus dem permanenten Speicher PS und führt die Wissensregeln WR1 ... WRn in einem Schritt S4 nach einer vorbestimmten Reihenfolge aus.

Sind für die Ausführung von Wissensregeln WR1 ... WRn bestimmte Daten D1 ... Dn bzw. Softwarebausteine SB1 ... SBn notwendig, werden diese in einem Schritt S5 in der Datenbank DB aufgesucht und in einem Schritt S6 in den flüchtigen Speicher FS geladen.

Das Wissen, in welchen Datenbanken DB1...DBn die Daten D1 .... Dn bzw. Softwarebausteine SB1 ... SBn zu finden sind und wie diese geladen werden können, beispielsweise mit Passwort und Benutzernamen, ist Teil des im permanenten Speicher PS gelagerten Wissens W1 ... Wn.

Die aus der Datenbank DB geladenen Daten D1 .... Dn bzw. Softwarebausteine SB1 ... SBn werden in den flüchtigen Speicher FS geladen und nach Verwendung wieder aus dem Speicher gelöscht.

Benötigt das Zielgerät G ein Update einer Softwarekomponente SK, im vorliegenden Fall z. B. einer DPWS-Komponente (DPWS = Devices Profile for Web Services), werden in Schritt S5 die benötigten Daten D1...Dn und Softwarebausteine SB1...SBn in den Datenbanken DB1...DBn gesucht. Die benötigten Daten D1...Dn und Softwarebausteine SB1...SBn werden sodann in einem Schritt S6 in den flüchtigen Speicher FS des Zielgerätes G geladen. Im vorliegenden Fall kann das Zielgerät G z.B. nur Softwarebausteine des Formats .NET nutzen. Der Aktivitäts-Controller AC stellt fest, dass die aufgefundenen Softwarebausteine SB1...SBn nur in einer Java-Technologie vorliegen. Entsprechend einer Wissensregel ruft der Aktivitäts-Controller AC ein Transformations-Tool TT1 zur Transformation des Softwarebausteins SB1 aus dem Format .NET in das Format Java auf. Hierzu kann beispielsweise das Transformations-Tool IKVM, ein frei verfügbares open source tool zur Umwandlung von Java Software Bausteinen in .NET Software Bausteine, genutzt werden.

Da die DPWS-Komponente aus insgesamt 23 einzelnen Softwarebausteinen besteht, die miteinander durch Abhängigkeiten verbunden sind, müssen zur Durchführung der Transformation zumindest nachfolgende Informationen bekannt sein:
- Name der Dateien der Softwarebausteine im Original-Format,
- Name der Dateien der Softwarebausteine im transformierten Format,
- Abhängigkeiten zwischen den Softwarebausteinen,
- Transformations-Service, der die IKVM-Transformation anbietet und/oder Speicherort des Transformations-Services,
- Dateiformat, in welches der Softwarebaustein transformiert werden soll.

Um die IKVM-Transformation durchzuführen, muss nachfolgendes Wissen bekannt sein:
- Reihenfolge, in der die Transformationen der einzelnen Softwarebausteine ausgeführt werden müssen, da Abhängigkeiten zwischen den Softwarebausteinen vorhanden sind,
- Parametrisierung des IKVM-Transformations-Tools für jeden Aufruf,
- Speicherort des Ergebnisses der Transformation,
- mögliche Ordnerstrukturen des Ergebnisses derTransformation,
- genaues Wissen darüber, welche Transformations-Artefakte wirklich notwendig sind.

Die Softwarebausteine sind beliebig und können Textbausteine wie z. B. Klassen oder auch Binärdaten sein. Beispiele sind C++-Klassen oder DPWS. Für die möglichen Daten D1...Dn sind komplette Datenmodelle definiert. Grundlegend ist ein Software-Unit-Modell, das alle notwendigen Daten über Softwarebausteine enthält. Diese Daten werden mit Wissensmodellen für Deployment- und/oder Transformationes-Anwendungen verbunden.

Da die Daten D1...Dn bzw. Softwarebausteine SB1...SBn im vorliegenden Fall eine Struktur aufweisen, die von dem Aktivitäts-Controller AC nicht ausführbar ist, erfolgt in Schritt S7 ein Webservice-Aufruf zum Start des Transformations-Tools IKVM, wobei die Daten D1...Dn bzw. die Softwarebausteine SB1...SBn in einem externen Gerät transformiert und das Transformations-Ergebnis im Format .NET in einem Schritt S8 in den flüchtigen Speicher FS zurückgeladen wird.

Dazu ist ein Webservice WS1, WS2 implementiert, der als einheitliche Schnittstelle für den Aufruf verschiedener solcher Transformations-Tools TT1 ... TTn fungiert.

Für das eigentliche Deployment wird in Schritt S9 über die Webservice-Schnittstelle WS1 ein Deployment-Tool DT1....DTn aufgerufen und ausgeführt. Mittels des Deployment-Tools DT1...DTn werden in Schritt S10 die transformierten Softwarebausteine in dem Zielgerät G installiert.

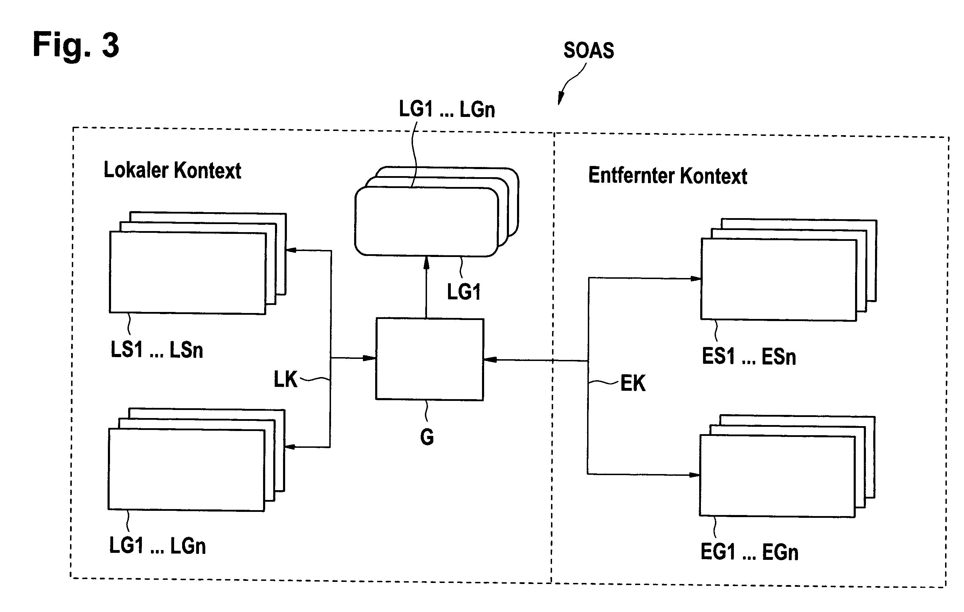

Fig. 3 zeigt das Zielgerät in einem Service-orientierten Automatisierungssystem SOAS mit lokalen Systemen LS1... LSn und lokalen Geräten LG1...LGn, die über eine lokale Kommunikationsverbindung LK mit dem Zielgerät G gekoppelt sind. Des Weiteren können an das Zielgerät G lokale Geräte LG1...LGn in Form von Sensoren und Aktoren gekoppelt sein. Im dargestellten Ausführungsbeispiel ist das Zielgerät G des Weiteren über eine entfernte Kommunikations-Verbindung EK wie Internet mit entfernten Systemen ES1...ESn sowie entfernten Geräten EG1...EGn gekoppelt.

Das Zielgerät G ist lokal in einer unzugänglichen Umgebung, beispielsweise einer Miene in einer unzugänglichen Region, einem Hochstromtestlabor oder Satellit angeordnet, d. h. einer Umgebung, die aufgrund der Entfernung, Gefährdung und/oder Kosten durch Bedienpersonal einer Betreiberfirma nicht aufgesucht werden kann, um z.B. ein Deployment durchzuführen.

Durch das erfindungsgemäße Verfahren ist das Zielgerät G in der Lage, ein erforderliches Deployment selbst durchzuführen. Das dazu erforderliche Trigger-Signal kann über eine Bedienperson ausgelöst oder auf dem Zielgerät selbstständig erzeugt werden.

Im beschriebenen Ausführungsbeispiel führt das Zielgerät G selbstständig ein Firmware-Update durch, wenn z. B. angeschlossene lokale Geräte G1...Gn wie Sensoren ausgefallen sind und das Zielgerät seine Ressourcen auf die verbleibenden Sensoren aufteilen muss. Alternativ kann das Trigger-Signal erzeugt werden, wenn beispielsweise in einer Laborumgebung wie Hochstromtestlabor oder Satellit verschiedene Testszenarien bzw. Experimente durchgeführt werden müssen.

Durch Erfassen von Zustandsänderungen wie beispielsweise Ausfall von Sensoren, Beenden eines Testszenarios oder Experiments wird das Trigger-Signal erzeugt und ein Deployment-Prozess gestartet. Aufgrund mangelnder Ressourcen des Zielgerätes G nutzt das Zielgerät unter Anwendung des in dem Zielgerät implementierten Aktivitäts-Controllers sowie der gespeicherten Informationen und/oder Regeln die lokale Service-Infrastruktur, d. h. die lokale Kommunikationsverbindung LK und die damit gekoppelten lokalen Systeme LS1...LSn bzw. lokalen Geräte LG1 ...LGn, um einzelne Deployment-Schritte wie beispielsweise Umwandlung von Daten, Zwischenspeicherung von Deployment-Artefakten durch die Services lokaler Systeme LS1...LSn bzw. lokaler Geräte LG1...LGn durchführen zu lassen.

Des Weiteren ist das Zielgerät G in der Lage auch Services entfernter Systeme ES1...ESn bzw. entfernter Geräte EG1...EGn zu nutzen, um beispielsweise Transformations- und/oder Deployment-Services auszuführen und/oder Daten bzw. Softwarebausteine zu identifizieren. Das Zielgerät G kann sich selbst deployen, wenn sich alle notwendigen Services innerhalb der verfügbaren Kommunikations-Infrastrukturen LK, EK befinden.

Die Erfindung schließt auch Verfahren ein, wobei innerhalb des Zielgerätes G Transformations- und/oder Deployment-Aufgaben abgearbeitet werden. Dies ist abhängig von den Ressourcen und Möglichkeiten des Zielgerätes G. Bei Aufgaben, die die Möglichkeiten des Zielgerätes G übersteigen, sind die beiden bereits erwähnten Service-Typen TT1...TTn bzw. DT1...DTn zu nutzen.

Eine alternative Ausführungsform zeichnet sich dadurch aus, dass einzelne oder alle Komponenten wie Recheneinheit RE, flüchtiger Speicher FS sowie permanenter Speicher PS des Aktivitäts-Controllers AC durch vorhandene Ressourcen des Gerätes G realisiert sind. Auch kann der Aktivitäts-Controller mit den Komponenten Recheneinheit RE, flüchtiger Speicher FS und permanenter Speicher PS sowie den Kommunikationsschnittstellen WS1...WS5 außerhalb des Zielgerätes G realisiert sein und ein eigenes Gerät darstellen.

## Patentansprüche

1. Verfahren zur Bereitstellung und/oder Installation von ein oder mehreren Softwarebausteinen auf einem Zielgerät in einem verteilten Computersystem unter Anwendung eines Sets von Informationen und/oder Regeln, die die Ausführung eines Deployments einschließen,
**dadurch gekennzeichnet ,**
**dass** das Set von Informationen und/oder Regeln in dem Zielgerät gespeichert wird, dass das Zielgerät als Reaktion auf ein Trigger-Signal unter Anwendung von Informationen und/oder Regeln des Sets zumindest einen benötigten extern abgelegten Softwarebaustein sucht und dass der zumindest eine Softwarebaustein nach Auffinden unter Anwendung von Informationen und/oder Regeln des Sets auf dem Zielgerät installiert wird.

2. Verfahren nach Anspruch 1,
**dadurch gekennzeichnet,**
**dass** als Informationen und/oder Regeln des Sets solche verwendet werden, die Wissen über Identifizierung von benötigten Softwarebausteinen und deren Abhängigkeiten sowie notwendige Transformations- und/oder Deployment-Anwendungen enthalten.

3. Verfahren nach Anspruch 1 oder 2,
**dadurch gekennzeichnet,**
**dass** für die Ausführung von Aktivitäten bei der Anwendung der Informationen und/oder Regeln des Sets externe Tools verwendet werden, die über Service-Aufrufe aufgerufen werden.

4. Verfahren nach zumindest einem der vorhergehenden Ansprüche,
**dadurch gekennzeichnet ,**
**dass** das Zielgerät zur Transformation des zumindest einen benötigten Softwarebausteins ein externes Transformations-Tools aufruft und dass die Transformation des zumindest einen Softwarebausteins mittels des Transformations-Tools in einer Umgebung außerhalb des Zielgerätes ausgeführt wird.

5. Verfahren nach zumindest einem der vorhergehenden Ansprüche,
**dadurch gekennzeichnet ,**
**dass** das Zielgerät zur Installation und/oder Konfiguration des zumindest einen benötigten Softwarebausteins ein externes Deployment-Tool aufruft und dass das Deployment-Tool in einer Umgebung außerhalb des Zielgerätes ausgeführt wird.

6. Verfahren nach zumindest einem der vorhergehenden Ansprüche,
**dadurch gekennzeichnet ,**
**dass** ein Ergebnis der externen Transformations- und/oder Deployment-Tools aus der externen Umgebung in das Zielgerät übertragen und in einem flüchtigen Speicher des Zielgerätes zwischengespeichert wird.

7. Verfahren nach zumindest einem der vorhergehenden Ansprüche,
**dadurch gekennzeichnet ,**
**dass** bei der Anwendung der Informationen und/oder Regeln des Sets mehrere benötigte, extern abgelegte wiederverwendbare Softwarebausteine gesucht und unter Anwendung von Informationen und/oder Regeln des Sets ein benötigtes Softwarepaket unter Anwendungen von Software-Konstruktions-Aktivitäten erzeugt wird.

8. Verfahren nach zumindest einem der vorhergehenden Ansprüche,
**dadurch gekennzeichnet ,**
**dass** das Set von Informationen und/oder Regeln durch einen Experten in das Zielgerät hochgeladen wird oder dass das Laden des Sets durch ein automatisches Update erfolgt.

9. System nach zumindest einem der vorhergehenden Ansprüche,
**dadurch gekennzeichnet ,**
**dass** das Trigger-Signal zum Anstossen des Deployments durch einen Benutzer, einen Web-Service-Aufruf und/oder durch eine erfasste Zustandsänderung des Zielgerätes generiert wird.

10. System (SYS) zur Bereitstellung und/oder Installation von ein oder mehreren Softwarebausteinen (SB1...SBn) auf einem Zielgerät (G) in einem verteilten Computersystem (SOAS) mit einem Aktivitäts-Controller (AC) zur Ausführung eines Sets von Informationen (I1...In) und/oder Regeln (WR1...WRn), die die Ausführung eines Deployments einschließen,
**dadurch gekennzeichnet ,**
**dass** der Aktivitäts-Controller (AC) sowie das Set von Informationen (I1...In) und/oder Regeln (WR1....WRn) in dem Zielgerät (G) implementiert sind, dass der Aktivitäts-Controller (AC) durch ein Trigger-Signal aktivierbar ist und als Reaktion auf das Trigger-Signal unter Anwendung von Informationen (I1...In) und/oder Regeln (WR1...WRn) des Sets zumindest einen benötigten, in einem externen Speicher (DB1...DBn) abgelegten Softwarebaustein (SB1...SBn) sucht und dass der zumindest eine Softwarebaustein (SB1...SBn) nach Auffinden unter Anwendung von Informationen (I1...In) und/oder Regeln (WR1...WRn) des Sets auf dem Zielgerät (G) installiert wird.

11. System nach Anspruch 10,
**dadurch gekennzeichnet,**
**dass** der Aktivitäts-Controller (AC) zumindest eine Web-Service-Schnittstelle (WS1...WS4) zum Aufruf externer Services (TT1...TTn; DT1...DTn) wie externe Speicher-Services, externe Transformations-Services und/oder externe Deployment-Services aufweist.

12. System nach Anspruch 10 oder 11,
**dadurch gekennzeichnet,**
der Aktivitäts-Controller (AC) einen permanenten Speicher (PS) zur Speicherung des Sets von Informationen (I1...In) und/oder Regeln (WR1...WRn) und einen flüchtigen Speicher (FS) zur Zwischenspeicherung von Ergebnissen externer Services (TT1...TTn; DT1...DTn) wie Transformations-Services und/oder Deployment-Services aufweist.

13. System nach zumindest einem der Ansprüche 10 bis 12,
**dadurch gekennzeichnet ,**
**dass** der Aktivitäts-Controller (AC) in einem Mikrocontroller des Zielgerätes (G) implementiert ist.

14. System nach zumindest einem der Ansprüche 10 bis 13,
**dadurch gekennzeichnet ,**
**dass** das Zielgerät (G) zumindest einen Sensor (LG1...LGn) zur Erfassung von Zustandsänderungen aufweist.
